# EUROPEAN PATENT SPECIFICATION

(11) **EP 0 819 589 B1**
(45) Date of publication and mention of the grant of the patent: **12.09.2001**
(21) Application number: 97111661.1
(22) Date of filing: 09.07.1997
(51) Int. Cl.: B60R 25/00, E05B 49/00

(54) **Vehicle theft prevention device**
System zur Diebstahlsicherung von Kraftfahrzeugen
Système pour la prévention de vol de véhicules

(30) Priority: 17.07.1996 JP 18791096
(43) Date of publication of application: 21.01.1998
(73) Proprietor: HONDA GIKEN KOGYO KABUSHIKI KAISHA, Minato-ku Tokyo (JP)
(72) Inventor: Nakajima, Yoshiyuki, Wako-shi, Saitama (JP)
(74) Representative: Herzog, Markus, Dipl.-Phys. Dr.

(56) References cited:
- EP-A- 0 658 672
- DE-A- 4 329 697
- US-A- 4 688 036
- US-A- 5 258 741
- PATENT ABSTRACTS OF JAPAN vol. 016, no. 161 (M-1237), 20 April 1992 & JP 04 011178 A (ALPHA CORP), 16 January 1992,

## Description

### Field of the invention

The present invention relates to a vehicle theft prevention device which can reduce a load imposed on a vehicle-mounted battery.

### Related art

As a conventional vehicle theft prevention device, there has been known a device comprising a sensor for sensing vibration, infrared rays, ultrasonic waves, etc., or detection means for detecting disconnection of a particular circuit, the sensor and the detection means being provided on a vehicle, and raising an alarm or disabling the vehicle to prevent movement in response to a signal from the sensor or detection means when an attempt is made to steal the vehicle.

Alternatively, some vehicle theft prevention devices equipped on a motorcycle can be put into the operating or not-operating state by a remote controller.

Further, JP Laid-Open No. Sho 61-30451 discloses a vehicle theft prevention device in which a transmitter/receiver and a security mechanism is equipped on a vehicle, and a transmitter/receiver is equipped on a portable carrier. A transmitter transmits a faint signal, and a receiver receives this faint signal. When the vehicle and the- carrier are separated by more than a predetermined distance, such a faint signal from one side cannot be received by the other. Upon detection of this situation, the security mechanism equipped on the vehicle is activated so as to prevent theft.

US 4,688,036 discloses a keyless entry system to a car, having remote control means for controlling an operating/non-operating state of the theft prevention device, wherein the remote control means includes a transmitter and a receiver, and the vehicle theft prevention device further comprises a central processing unit supplied with energy from a vehicle battery through a main switch of the vehicle, and operating current controlling means for causing the receiver to operate for a predetermined period of time after an electrical equipment switch of the vehicle other than the main switch of the vehicle has been operated.

### Problems to be solved by the invention

However, a conventional vehicle theft prevention device for a motorcycle, having a remote controller, can always be switched on/off by the remote controller.

Thus, the receiver on the vehicle side must always be in a waiting state so that it can always receive an operating signal from the transmitter. Therefore, an operating current is always flowing into the receiver from the vehicle-mounted battery, resulting in a large load being imposed on the vehicle-mounted battery.

Similarly, JP Laid-Open Sho 61-30451 discloses a vehicle theft prevention device in which the transmitter/receiver equipped thereon is always in an operating state. Therefore, an operating current is always flowing into the transmitter/receiver from the vehicle-mounted battery, resulting in a large load being imposed on the vehicle-mounted battery.

The present invention has been conceived to overcome the problems of the above-related art, and aims to provide a vehicle theft prevention device having a remote controller comprising a transmitter and a receiver, with an operating current controlling means for causing the receiver to be in a waiting state for only a predetermined period of time after any switch equipped on the handlebars of a motorcycle or the vicinity has been turned on, so as to provide and econimical, highly-reliable vehicle theft prevention device with a reduced load imposed on a vehicle-mounted battery.

### Means to solve the problems

According to the present invention, this object is achieved by the vehicle theft prevention device defined in the independent claim. Embodiments of the invention are disclosed in the dependent claims. With this arrangement, it is possible to reduce a load imposed on a vehicle-mounted battery.

Preferably, the vehicle theft device controls the operating/non-operating state of a receiver using switching means for turning the power supply to the receiver on or off.

Since the operating current controlling means of a vehicle theft prevention device of this invention controls the operating/non-operating state of a receiver using switching means for turning the power supply to the receiver on or off, it is possible to reliably control the operation of the receiver with a simple structure. Moreover, since no operating current flows into the receiver after the predetermined period of time, it is possible to reduce a load imposed on a vehicle-mounted battery.

Since the switch of a vehicle theft prevention device of the present invention is also an electrical equipment operating switch other than the main switch of a vehicle, there is no need to provide an additional switch for a theft prevention device.

Further, since various switches other than the main switch are not usually used for theft prevention, and a vehicle is provided with a variety of switches, it will be difficult for anyone other than the owner to normally operate the vehicle theft prevention switch.

In the following, the present invention will be described based on a preferred embodiment shown in drawings.

### Brief description of the drawings

Fig. 1 is a block diagram showing the major elements of a vehicle theft prevention device of the present invention.

Fig. 2 is a block diagram showing the major elements of timer means of a vehicle theft prevention device of the present invention.

Fig. 3 is a diagram showing the positions of electric equipment operating switches of a motorcycle.

Fig. 4 is a block diagram showing the major elements of a vehicle theft prevention device including a lock cable of the present invention.

Fig. 5 is a diagram showing the state of using a lock cable.

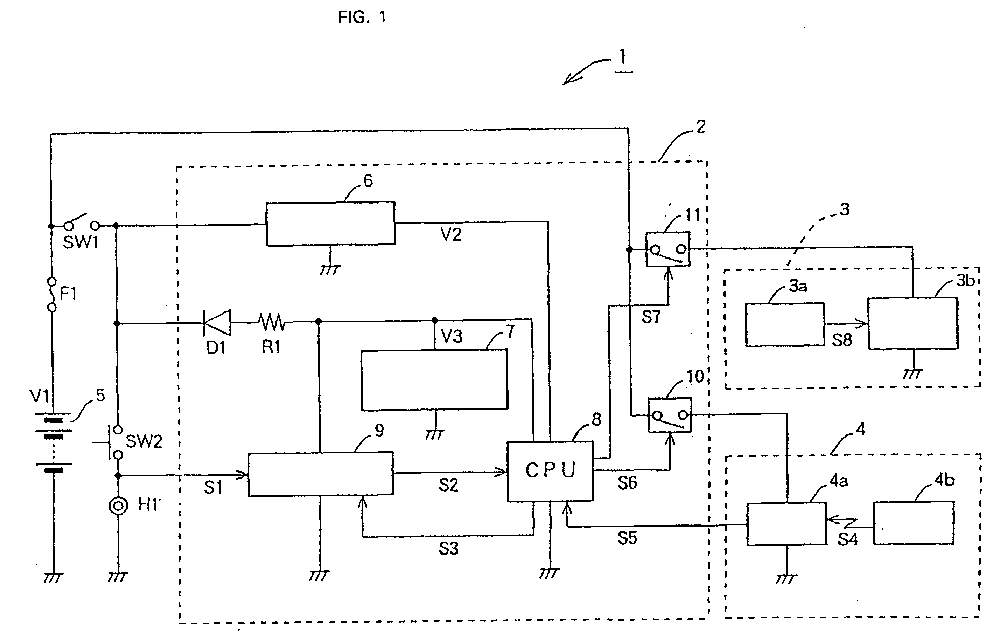

Fig. 1 is a block diagram showing the structures of the major elements of a vehicle theft prevention device of the present invention.

In Fig. 1, a vehicle theft prevention device 1 comprises operating current controlling means 2, warning means 3, a remote control means 4, a vehicle-mounted battery 5, a main switch SW1, and a horn switch SW2.

The operating current controlling means 2 includes a constant voltage means 6, a back up power supply 7, a CPU (central processing unit) 8, voltage detection means 9, switching means 10, switching means 11, a resistor R1, and a diode D1.

The warning means 3 includes a sensor 3a and a warning section 3b, while the remote control means 4 includes a receiver 4a and a transmitter 4b.

The remote control means 4 includes a receiver 4a and a transmitter 4b. The receiver 4a is equipped on a vehicle, and the transmitter 4b is carried by a driver. By operating the transmitter 4b, an operating signal S4 is transmitted via radio waves, ultrasonic waves, infrared rays, or so forth.

The receiver 4a receives an operating signal S4 transmitted from the transmitter 4b, and outputs an operating signal S5 to the CPU 8 based on the operating signal S4.

For the CPU 8, a one-chip micro computer including a RAM, a ROM, and a timer, and being capable of I/O control and interrupt control is employed, and it controls various devices equipped on a vehicle, based on an operating signal S5 transmitted from the receiver 4a.

The warning means 3 equipped on a vehicle includes a sensor 3a and a warning section 3b. As a sensor 3a, there may be a sensor for detecting disconnection of lead wires connected to the main switch SW1, a vibration sensor for detecting vibration of a vehicle, an ultrasonic sensor for detecting he movement of a vehicle using ultrasonic waves, an infrared sensor for detecting movement of a vehicle using infrared rays, and so forth.

The warning section 3b of the warming means 3 raises an alarm sound based on a sensor signal S8 outputted by various sensors 3a equipped on a vehicle when disconnection of a lead wire, vibration of a vehicle, or the movement of a vehicle are detected.

Also, there is means for prohibiting ignition of a spark plug based on a sensor signal S8 outputted from various sensors 3a to thereby disable the activation of an engine in order to prevent theft. This may be used together with a warning section 3b.

With the main switch SW1 turned on, the operating current controlling means 2 causes the warning means 3 and the remote controller 4 to not operate. With the main switch SW 1 turned off, it causes the receiver 4a of the remote controller 4 to operate for a predetermined period of time by turning on an electrical equipment operating switch (a horn switch) SW2 so that the receiver 4a is in a waiting state capable of receiving transmissions from the transmitter 4b.

Subsequently, after making the receiver 4a operate for a predetermined period of time, the operating current controlling means 2 then turns off power supply to the receiver 4a to thereby terminate the operation thereof.

A predetermined period of time during which the receiver 4a of the remote controller 4 is kept operating is preferably about 60 seconds.

The constant voltage means 6 of the operating current controlling means 2 generates constant DC voltage V2 based on DC voltage V1 supplied from a vehicle-mounted battery via a fuse F1 and the main switch SW1, and supplies the DC constant voltage V2 to the CPU 8.

The receiver 4a of the remote controller 4 receives power from the vehicle-mounted battery 5 via the switching means 10, and the warning section 3b of the warning means 3 receives power from the vehicle-mounted battery 5 via the switching means 10.

With the main switch SW1 turned on, the CPU 8 detects that it receives constant DC voltage V2 via its power terminal. It then outputs a switch control signal S6 to the switching means 10 to thereby turn it off, so that the receiver 4a is no longer supplied with DC voltage V1, and thus comes to be in an not-operating state. Further, a switch control signal S7 is output to the switching means 11 to thereby turn it off, so that the warning section 3b is no longer supplied with DC voltage V1, and then comes to be in an not-operating state.

In order to reduce a load imposed on the back up power supply 7, the CPU 8 outputs a control signal to the voltage detection means 9 so as to reset the voltage detection means 9 to be in a state where it is disconnected from the back up power supply 7 or in a state where it consumes a minimum current.

With the main switch SW1 turned off, the voltage supplied from the constant voltage means 6 of the operating current controlling means 2 to the CPU 8 becomes zero. In this situation, the CPU 8 is driven by DC voltage V3 supplied by the back up power supply 7. The CPU 8 then detects that the voltage at its power terminal is less than a predetermined normal voltage, and outputs a control signal S3 to the voltage detection means 9 to thereby set it in an operating state.

DC voltage V3 is supplied from the back up power supply 7 to a point between terminals of the horn switch SW2 via the resistor R1 and the diode D1, so that a switch-on operating signal SW1 is inputted into the voltage detection means 9 by turning on the horn switch SW2.

The diode D1 prevents supply of DC voltage V1 into the back up power supply 7 and the CPU 8 when the main switch S1 is in a switched-on state, while the resistor R1 prevents an excess current in the back up power source 7 due to the turning on of the horn switch SW2.

As a switch for inputting a switch-on operating signal S1 into voltage detection means 9, a switch other than a horn switch SW 2, excluding the main switch SW 1, may be employed.

The voltage detection means 9 outputs a timer activation signal S2 to the CPU 8 based on a switch-on operating signal S1.

The CPU 8 starts a timer operation based on a timer activation signal S2 supplied from the voltage detection means 9, and outputs a switch control signal S6 to the switching means 10 so as to keep it in an on-state for a predetermined period of time until the timer operation is completed.

Having received DC voltage V1 from the vehicle-mounted battery 5 via the switching means 10 for a predetermined period of time, the receiver 4a comes to be in a receivable state. It then receives an operating signal S4 transmitted from the transmitter 4b and outputs an operating signal S5 to the CPU 8.

If the operating signal S5 from the receiver 4a is a command signal instructing to set the warning. means 3, the CPU 8 outputs a switch control signal S7 to the switching means 11 to turn it on in order to supply DC voltage V1 from the vehicle-mounted battery 5 to the warring section 3b to make it operate.

After a predetermined period of time has elapsed due to the timer operation of the CPU 8, the CPU 8 outputs a switch control signal S6 to the switching means 10 to turn it off, and to thus terminate the operation of the receiver 4a.

As described above, a vehicle theft prevention device comprises operation current controlling means including constant voltage means, a back up power supply, a CPU, voltage detection means, switching means, etc., and supplies power to the receiver of a remote controller for a predetermined period of time after the main switch has been turned off. The power supply to the receiver is terminated after the lapse of a predetermined period of time. As a result, it is possible to reduce a load imposed on a vehicle-mounted battery.

Further, since the receiver of a remote controller must be put into a receivable state by a predetermined switching operation in order to release the warning means of a vehicle theft preventing device by using a remote controller, it is possible to enhance a theft prevention effect.

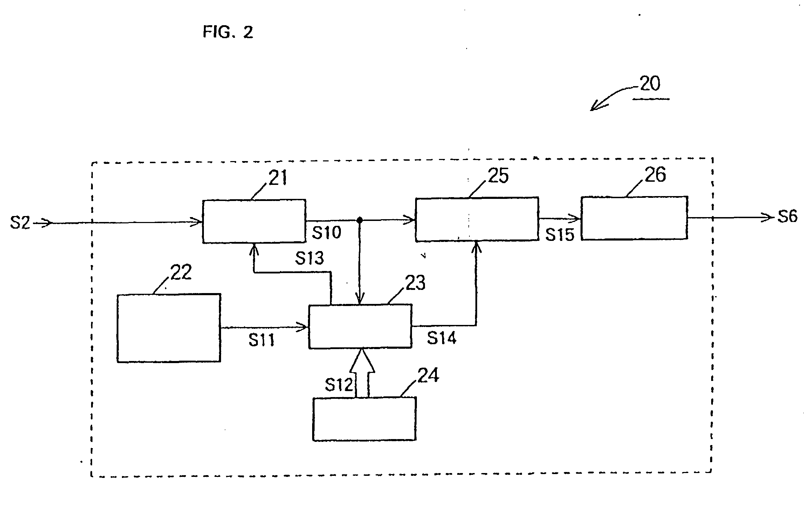

Fig. 2 is a block diagram showing the major elements of the timer means of a vehicle theft prevention device of the present invention.

In the drawing, timer means 2 comprises incorporation means 21, synchronous signal generation means 22, counting means 23, memory means 24, latching means 25, and driving means 26.

The timer means 20 is shown in a block diagram, exemplifying a timer function of the CPU 8 (a single-chip micro computer) shown in Fig. 1.

The synchronous signal generation means 22 includes an oscillator which oscillates at an oscillation frequency generally determined by an external component (a quartz oscillator, etc.,) of the CPU 8 (a single-chip micro computer), and outputs an oscillation output as a clock signal S11 to the counting means 23.

The incorporation means 21 incorporates a timer activation signal S2 from the voltage detection means 9 shown in Fig. 1, and outputs an incorporation signal S10 to the counting means 23 and the latching means 25.

An incorporation signal S10 outputted from the incorporation means 21 resets the count value of the counting means 23 to zero to thereby enable counting.

The counting means 23, reset by an incorporation signal S10 and count enabled, starts counting clock signals S11 from the synchronous signal generation means 22. With the count value 1, the counting means 23 outputs a reset signal S13 to the incorporation means 21 to thereby reset it to be in a state awaiting or a timer activation signal S2 to be inputted.

The counting means 23 counts clock signals S11 from the synchronous signal generation means 22 until the count value of the counting means 23 becomes equal to a set value set by a timer setting signal S12 from the memory means 24. When the count value becomes equal to the set value, the counting means 23 outputs a timer signal S14 to the latching means 25.

The latching means 25 latches an incorporation signal S10 from the incorporation means 21 and outputs a latching signal S15 into the driving means 26. A latching signal S15 is reset by a timer signal S13 from the counting means 23.

The driving means 26 outputs a switch control signal S6 to the switching means 10 shown in Fig. 1 based on a latching signal S15 to control turning on or off of the switching means 10.

As described above, the timer means comprises incorporation means, synchronous signal generation means, counting means, memory means, latching means, and driving means, and power is supplied to the receiver of the remote controller for a predetermined period of time after the main switch has been turned off, to thereby prevent an operating current from always flowing into the receiver. As a result, a load imposed on a vehicle-mounted battery can be reduced.

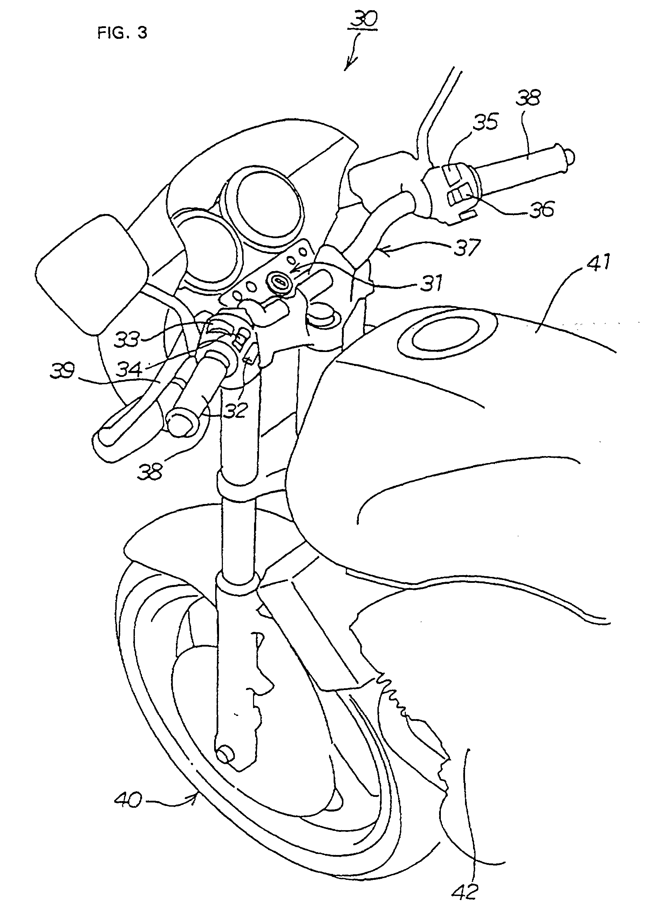

Fig. 3 is a diagram showing the positions of the electrical equipment operating switches of a motorcycle.

Fig. 3 shows a handlebar 37, a grip 38, a clutch lever 39, a front tire with a wheel 40, a fuel tank 41, and an engine 42 of a motorcycle 30. It also shows the electrical equipment operating switches of the motorcycle 30, including a main switch 31, a horn switch 32, a head lamp switch 33, a winker switch 34, a kill switch 35, and a starter switch 36.

Although the vehicle theft prevention device of Fig. 1 includes a horn switch SW2 as an electrical equipment operating switch to cause the receiver of the remote controller to operate for a predetermined period of time, a head lamp switch 33, a winker switch 34, a kill switch 35, a starter switch 36, or the like may be employed instead.

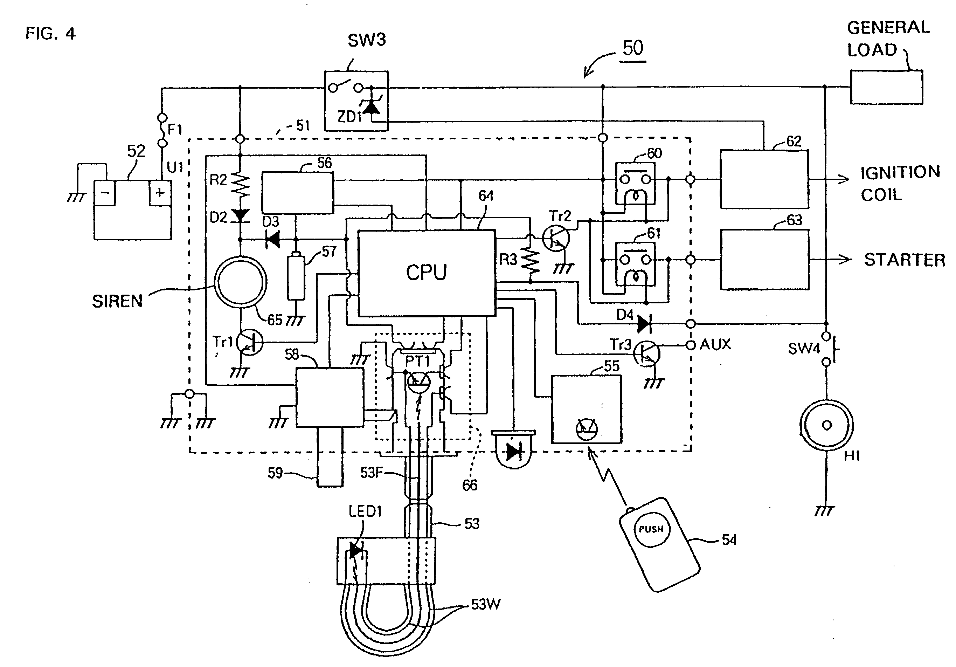

Fig. 4 is a block diagram showing the major elements of a vehicle theft prevention device equipped with a lock cable of the present invention.

In Fig. 4, a vehicle theft prevention device 50 comprises a lock cable 53, connection means 66, a charge delay circuit 56, a back up power supply 57, a motor actuator 58, a release button 59, a CPU 64, switching means 60, switching means 61, a CDI ignition device 62, a starter magnet switch 63, a remote controller controlling section 55, a resistor R2, a resistor R3, a diode D2, a diode D3, a diode D4, a transistor Tr1, a transistor Tr2, and a transistor Tr3.

The lock cable 53 comprises an emitting diode LED1, an optical fiber cable 53F, an electric line 53W, and a photo transistor PT1.

Also, a vehicle theft prevention device 50 further comprises, as peripheral devices, a remote controller (transmitter) 54, a vehicle-mounted battery 52, a main switch SW3, and a norn switch SW4.

When the main switch SW3 is turned off, the CPU 64 causes the transistor Tr2 to be in a cut-off state to thereby turn off the switching means 60 and 61. As a result, a power supply line connecting the vehicle-mounted battery 52, the ignition device 32, and the starter magnet switch 63 via main switch SW3 is electrically disconnected to thereby prohibit engine ignition and motor activation.

The CPU 64 is provided with a timer function, and may prohibit engine ignition and motor activation by causing the transistor Tr2 to be in a cut-off state after about ten seconds have elapsed following the turning off of the main switch SW3.

When a lock cable 53 is set in the connection means 66 of a vehicle theft prevention device 50, the connection means 66 applies a bias to the photo transistor PT1 of the lock cable 53. It also supplies a forward current to an light emitting diode LED1 via the electric line 53W to cause light emission. The emitted light is received by the photo transistor PT1 via the optical fiber cable 53F.

When a lock cable 53 is set once in the connecting means 66 of the vehicle there prevention device 50, the CPU 64 detects that the lock cable 53 has been set in the connection means 66, and restrains a release button 59 so as to control the motor actuator 58 such that the setting of the lock cable 53 to the connection means 66 is not released.

Disconnection of the lock cable 53 results in disconnection of the electric line 53W and the optical fiber cable 53F as well. Accordingly, no light is inputted to the photo transistor PT1, causing the photo transistor PT1 to be in a cut-off state. Detecting this situation, the CPU 64 drives the transistor Tr1 to turn it on so that an electric current is transmitted to the siren 35 from the vehicle-mounted battery 52 via the resistor R2 and the diode D2. As a result, an alarm sound is generated.

Note that once the lock cable 53 has been disconnected, the alarm sound by siren 35 will not be stopped even if it is re-connected.

For more reliable detection of the disconnection of the lock cable 53, a forward electric current to flow into an LED 1 is modulated to thereby modulate emitted light. With this arrangement, it makes it difficult to carry out a deceptive operation using a bypass circuit, etc., accompanying the disconnection of the lock cable 53.

If the main switch SW3 is turned on when the prevention of engine ignition and motor activation is not released, the CPU 64 drives the transistor Tr1 to turn it on so that an electric current flows from the vehicle-mounted battery 52 to the siren 35 via the resistor R2 and the diode D2 to raise an alarm. When the main switch SW3 is turned off, the CPU 64 cuts off the transistor Tr1 to thereby stop the alarm sound.

After operating a predetermined switch of a vehicle (a horn switch SW4 in this embodiment), the remote controller controlling section (receiver) 25 operates for a predetermined period of time due to a timer operation of the CPU 64, thus becoming capable of receiving a command from the remote controller (transmitter) 54.

The vehicle theft prevention device 50 can receive a command from the remote controller 54 when the remote controller controlling section 55 is in an receivable state, and release the prohibiting of engine ignition and motor activation based on the command received.

If an engine is not activated within a predetermined period of time by the timer operation of the CPU 64 after releasing the prohibiting of engine ignition and motor activation , engine ignition and motor activation is again prohibited after the lapse of a predetermined period of time.

The vehicle theft prevention device 50 receives a command from the remote controller 54 when the remote controller controlling section 55 is in a receivable state, and the CPU 64 controls the motor actuator 58 based on the command received so as to release the restraint on the release button 59. By pressing the release button 59, the lock cable 53 can be unlocked from the connection means 66.

If the lock cable 53 is not unlocked from the connection means 66 within a predetermined period of time monitored by the timer operation of the CPU 64 after the motor actuator 58 has released the restraint on the release button 59, the release button 59 is again restrained after the lapse of a predetermined period of time.

As described above, the vehicle theft prevention device 50 comprises the lock cable 53, the connection means 66, the charge delay circuit 56, the back up power supply 57, the motor actuator 58, the release button 59, the CPU 64, the switching means 60, the switching means 61, the CDI ignition device 62, the starter magnet switch 63, the remote controller controlling section 55, the resistor R2, the resistor R3, the diode D2, the diode D3, the diode D4, the transistor Tr1, the transistor Tr2, and the transistor Tr3. With this arrangement, the constant flow of an operating current into the remote controller controlling section 55 is prevented, so that a load imposed on a vehicle-mounted battery is reduced and theft prevention capability is enhanced.

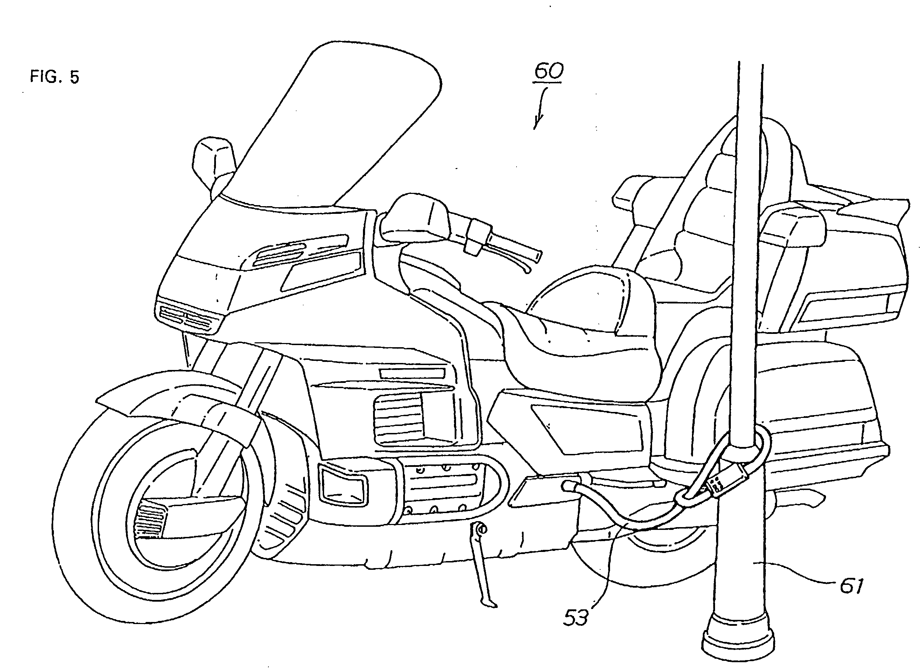

Fig. 5 is a diagram explaining the state of using a lock cable.

As shown in Fig. 5, a motorcycle 60 is tied to a pillar 61 using the lock cable 53 for theft prevention.

As described above, a vehicle theft prevention device comprises a lock cable combined with a siren, a remote controller combined with an electrical equipment operating switch other than the main switch of a vehicle, and warning means, and is capable of a timer function using a CPU. With this arrangement, it can attain a high theft prevention capability.

The above is only one embodiment of the present invention, and the application of the present invention is not limited to the above embodiment.

### Advantage of the invention

With the above arrangement, the present invention achieves the following advantages.

In this invention, a vehicle theft prevention device comprises operating current controlling means for causing the receiver of a remote controller to operate for a predetermined period of time after a predetermined operation has been performed. This allows reduction of a load imposed on a vehicle-mounted battery. As a result, there can be provided an economical and highly reliable vehicle theft prevention device.

In this invention, a vehicle theft prevention device comprises operating current controlling means for controlling the operating/not-operating state of a receiver by turning power supply to the receiver on or off so as to reliably control the operation of a receiver with a simple structure. As a result, there can be provided an economical and more reliable vehicle theft prevention device.

Further, in this invention, a receiver operates only for a predetermined period of time after a predetermined switch of a vehicle has been turned on, so that a theft prevention device set in an operating state is prevented from being released by operating only the receiver of a remote controller. As a result, there can be provided a vehicle theft prevention device giving highly effective theft prevention.

Further, in this invention, an electrical equipment operating switch other than the main switch is used also as a switch for a vehicle theft prevention device. This eliminates the need to provide an additional switch for a theft prevention device. In addition, as various switches other than the main switch are not usually used for theft prevention, and there are various switches are provided to a vehicle, it is hard for others to figure out the normal operation. As a result, there can be provided an economical theft prevention device giving highly effective theft prevention.

Further, in this invention, a vehicle theft prevention device according to this invention is equipped on a motor cycle, and a load imposed on a venicle-mounted battery of a motorcycle can be reduced. With this arrangement, there can be provided an economical, highly reliable theft prevention device that is highly effective for theft prevention, which can be preferably used for a motorcycle.

As described above, the present invention can provide an economical, highly reliable vehicle theft prevention device that is highly effective for theft prevention, which can be preferably used for a motorcycle.

To provide an economical, highly reliable vehicle theft prevention device, which can reduce a load imposed on a vehicle-mounted battery, comprising a remote controller including a transmitter and a receiver, and operating current controlling means for causing the receiver to operate for a predetermined period of time after turning on any switch installed in a handle or the vicinity thereof.

A vehicle theft prevention device 1 comprises operating current controlling means 2, warning means 3, remote controller 4, vehicle-mounted battery, a main switch SW1, and a horn switch SW2.

### Explanation of numerals

- 1, 50: vehicle theft prevention device
- 2: operating current controlling means,
- 3: warning means
- 3a: sensor
- 3b: warning section
- 4: remote controller
- 4a: receiver
- 4b: transmitter
- 5, 52: vehicle-mounted battery
- 6: constant voltage means
- 7: back up power supply
- 8: CPU (central Processing Unit)
- 9: voltage detection means
- 10, 11: switching means
- 20: timer means
- 21: incorporation means
- 22: synchronous signal generation means
- 23: counting means
- 24: memory means
- 25: latching means
- 26: driving means
- 30: motorcycle
- 31: main switch
- 32: horn switch
- 33: head lamp switch
- 34: winder switch
- 35: kill switch
- 36: starter switch
- 37: handle
- 38: grip
- 39: clutch lever
- 40: front tire with a wheel
- 41: fuel tank
- 42: engine
- 53: lock cable
- 53F: optical fiber cable
- 53W: electric line
- 54: remote controller (transmitter)
- 55: remote controller controlling section
- 56: charge delay circuit
- 57: back up power supply
- 58: motor actuator
- 59: release button
- 60, 61: switching means
- 62: CDI ignition device
- 63: starter magnet switch
- 64 CPU, 66: connection means
- D1, D2, D3, D4: diode
- F1: fuse
- H1: horn
- LED1: emitting diode
- PT1: photo transistor
- R1, R2, R3: resistor
- S1: switch-on operating switch
- S2: timer activation signal
- S3: control signal
- S4, S5: operating signal
- S6, S7: switch control signal
- S8: sensor signal
- S10: incorporation signal
- S11: clock signal
- S12: timer set signal
- S13: reset signal
- S14: timer signal
- S15: latch signal
- SW1, SW3: main switch
- SW2, SW4: horn switch
- Tr1, Tr2, Tr3: transistor
- V1, V2: DC constant voltage of vehicle-mounted battery
- V3: DC constant voltage of back up power supply.

## Claims

1. A vehicle theft prevention device having remote control means (4; 54, 55) for controlling an operating/non-operating state of the theft prevention device (1; 50), wherein
the remote control means (4; 54, 55) includes a transmitter (4b; 54) and a receiver (4a; 55), and
the vehicle theft prevention device (1; 50) further comprises a central processing unit (8; 61) supplied with energy from a vehicle battery (5; 52) through a main switch (SW1; SW3) of the vehicle, and operating current controlling means (2) for causing the receiver (4a; 55) to operate for a predetermined period of time after an electrical equipment switch (SW2; SW4) of the vehicle other than the main switch (SW1; SW3) of the vehicle has been operated, **characterized in that**
the vehicle theft prevention device (1; 50) further comprises a backup power supply (7; 57) for the central processing unit (8; 61) and a voltage determining means (9) connected both with the backup power supply (7; 57) and - through the electrical equipment switch (SW2; SW4) - with the vehicle battery (5; 52), wherein,
when the main switch (SW1; SW3) is turned off and the central processing unit (8; 61) is supplied by the backup power supply (7; 57), the voltage determining means (9) outputs a timer signal (S2) of said predetermined time to connect said receiver (4a) with the vehicle battery (5; 52).

2. A vehicle theft prevention device as defined in claim 1, wherein the operating current controlling means (2) controls the operating/non-operating state of the receiver using switching means (10) for turning power supply of the vehicle battery (5) to the receiver (4a) on/off.

3. A vehicle theft prevention device as defined in claim 1, wherein
the vehicle is a motorcycle and the electrical equipment switch (SW2, 32) is mounted on a handlebar (37) of the motorcycle.

4. A vehicle theft prevention device as defined in one of the claims 1 to 3, wherein
the vehicle theft prevention device (1) comprises a warning means (3) which is activated in response to a signal from a theft detecting sensor (3a).

5. A vehicle theft prevention device as defined in any of claims 1 to 4, wherein
the vehicle theft prevention device (50) comprises a lock cable (53) removably mounted at the vehicle and an actuator (58) for releasably locking the lock cable (53) at the vehicle in response to a signal from the central processing unit (64) if the vehicle theft prevention device (50) is activated.

## Patentansprüche

1. Fahrzeugdiebstahlverhinderungsvorrichtung mit einem Fernsteuermittel (4; 54, 55) zum Steuern eines Betriebs/Nichtbetriebszustands der Diebstahlverhinderungsvorrichtung (1; 50), worin
das Fernsteuermittel (4; 54, 55) einen Sender (4b; 54) und einen Empfänger (4a; 55) umfasst, und
die Fahrzeugdiebstahlverhinderungsvorrichtung (1; 50) ferner eine zentrale Prozessoreinheit (8; 61) umfasst, die mit Energie von einer Fahrzeugbatterie (5; 52) durch einen Hauptschalter (SW1; SW3) des Fahrzeugs versorgt wird, sowie ein Betriebsstromsteuermittel (2), um zu bewirken, dass der Empfänger (4a; 55) für eine vorbestimmte Zeitperiode arbeitet, nachdem ein elektrische Ausstattungsschalter (SW2; SW4) des Fahrzeugs, der nicht der Hauptschalter (SW1; SW3) des Fahrzeugs ist, betätigt worden ist, **dadurch gekennzeichnet, dass** die Fahrzeugdiebstahlverhinderungsvorrichtung (1; 50) ferner eine Reservestromversorgung (7; 57) für die zentrale Prozessoreinheit (8; 61) sowie ein Spannungserfassungsmittel (9) aufweist, das sowohl mit der Reservestromversorgung (7; 57) als auch - durch den elektrische Ausstattungsschalter (SW2; SW4) - mit der Fahrzeugbatterie (5; 52) verbunden ist, worin
wenn der Hauptschalter (SW1; SW3) ausgeschaltet wird und die zentrale Prozessoreinheit (8; 61) von der Reservestromversorgung (7; 57) versorgt wird, das Spannungserfassungsmittel (9) ein Timersignal (S2) der vorbestimmten Zeit ausgibt, um den Empfänger (4a) mit der Fahrzeugbatterie (5; 52) zu verbinden.

2. Fahrzeugdiebstahlverhinderungsvorrichtung nach Anspruch 1, worin das Betriebsstromsteuermittel (2) den Betriebs/Nichtbetriebszustand des Empfängers unter Verwendung eines Schaltmittels (10) zum Ein/Ausschalten der Stromversorgung der Fahrzeugbatterie (5) zu dem Empfänger (4a) steuert.

3. Fahrzeugdiebstahlverhinderungsvorrichtung nach Anspruch 1, worin das Fahrzeug ein Kraftrad ist und der elektrische Ausstattungsschalter (SW2, 32) an einer Lenkstange (37) des Kraftrads angebracht ist.

4. Fahrzeugdiebstahlverhinderungsvorrichtung nach einem der Ansprüche 1 bis 3, worin die Fahrzeugdiebstahlverhinderungsvorrichtung (1) ein Warnmittel (3) aufweist, das in Antwort auf ein Signal von einem Diebstahlerfassungssensor (3a) aktiviert wird.

5. Fahrzeugdiebstahlverhinderungsvorrichtung nach einem der Ansprüche 1 bis 4, worin die Fahrzeugdiebstahlverhinderungsvorrichtung (50) ein an dem Fahrzeug entfernbar angebrachtes Schließkabel (53) sowie einen Aktuator (58) zum lösbaren Schließen des Schließkabels (53) an das Fahrzeug in Antwort auf ein Signal von der zentralen Prozessoreinheit (64), wenn die Fahrzeugdiebstahlverhinderungsvorrichtung (50) aktiviert ist, umfasst.

## Revendications

1. Dispositif antivol pour véhicule présentant des moyens de commande à distance (4 ; 54, 55) destinés à commander un état de fonctionnement/non-fonctionnement du dispositif antivol (1 ; 50), dans lequel
les moyens de commande à distance (4 ; 54, 55) comprennent un émetteur (4b ; 54) et un récepteur (4a ; 55), et
le dispositif antivol pour véhicule (1 ; 50) comprend en outre une unité de traitement centrale (8 ; 61) alimentée en électricité par une batterie de véhicule (5 ; 52) par l'intermédiaire d'un interrupteur principal (SW1 ; SW3) du véhicule, et des moyens de commande du courant de régime (2) destinés à amener le récepteur (4a ; 55) à fonctionner pendant une période de temps prédéterminée, une fois qu'un interrupteur d'équipement électrique (SW2 ; SW4) du véhicule autre que l'interrupteur principal (SW1 ; SW3) du véhicule a été actionné, **caractérisé en ce que** :
le dispositif antivol pour véhicule (1 ; 50) comprend en outre une alimentation électrique de réserve (7 ; 57) destinée à l'unité de traitement centrale (8 ; 61) et des moyens de détermination de tension (9) reliés à la fois à l'alimentation électrique de réserve (7 ; 57) et - par l'intermédiaire de l'interrupteur d'équipement électrique (SW2 ; SW4) - à la batterie du véhicule (5 ; 52), dans lequel :
lorsque l'interrupteur principal (SW1 ; SW3) est en position d'arrêt et que l'unité de traitement centrale (8 ; 61) est alimentée par l'alimentation électrique de réserve (7 ; 57), les moyens de détermination de tension (9) délivrent un signal de minuterie (S2) de ladite période prédéterminée de manière à relier ledit récepteur (4a) à la batterie du véhicule (5 ; 52).

2. Dispositif antivol pour véhicule selon la revendication 1, dans lequel les moyens de commande du courant de régime (2) commandent l'état de fonctionnement/non-fonctionnement du récepteur à l'aide des moyens de commutation (10) pour transmettre ou non de l'énergie entre la batterie du véhicule (5) et le récepteur (4a).

3. Dispositif antivol pour véhicule selon la revendication 1, dans lequel le véhicule est un motocycle et l'interrupteur d'équipement électrique (SW2, 32) est monté sur un guidon (37) du motocycle.

4. Dispositif antivol pour véhicule selon l'une des revendications 1 à 3, dans lequel :
le dispositif antivol pour véhicule (1) comprend des moyens d'avertissement (3) qui sont activés en réponse à un signal provenant d'un capteur détectant un vol (3a).

5. Dispositif antivol pour véhicule selon l'une quelconque des revendications 1 à 4, dans lequel :
le dispositif antivol pour véhicule (50) comprend un câble de verrouillage (53) monté sur le véhicule de manière extractible et un dispositif d'actionnement (58) destiné à verrouiller de manière détachable le câble de verrouillage (53) sur le véhicule, en réponse à un signal émis par l'unité de traitement centrale (64) dans le cas où le dispositif antivol pour véhicule (50) est activé.
